# EUROPEAN PATENT SPECIFICATION

(11) **EP 4 059 199 B1**
(45) Date of publication and mention of the grant of the patent: **11.10.2023**
(21) Application number: 20800625.4
(22) Date of filing: 30.10.2020
(51) Int. Cl.: H04L 9/40, H04L 51/212

(54) **ELECTRONIC MAIL SECURITY**
E-MAIL-SICHERHEIT
SÉCURITÉ DE COURRIER ÉLECTRONIQUE

(30) Priority: 13.11.2019 GB 201916467
(43) Date of publication of application: 21.09.2022
(73) Proprietor: British Telecommunications public limited company, London E1 8EE (GB)
(72) Inventor: KALLOS, George, London EC4V 5BT (GB); EL-MOUSSA, Fadi, London EC4V 5BT (GB)
(74) Representative: British Telecommunications public limited company Intellectual Property Department
(86) International application number: PCT/EP2020/080604
(87) International publication number: WO 2021/094114

(56) References cited:
- US-A1- 2019 319 905
- XUN YUE ET AL: "Artificial immune system inspired behavior-based anti-spam filter", SOFT COMPUTING, vol. 11, no. 8, 2 September 2006 (2006-09-02), pages 729-740, XP055754929, DE ISSN: 1432-7643, DOI: 10.1007/s00500-006-0116-0
- VERMA RAKESH ET AL: "Phish-IDetector: Message-ID based automatic phishing detection", 2015 12TH INTERNATIONAL JOINT CONFERENCE ON E-BUSINESS AND TELECOMMUNICATIONS (ICETE), SCITEPRESS, vol. 4, 20 July 2015 (2015-07-20), pages 427-434, XP032927696, [retrieved on 2016-07-20]

## Description

The present invention relates to the detection of malicious electronic mail.

Phishing attacks are increasingly common and sophisticated. Such attacks begin to evade human perception by providing emails that replicate in almost every respect authentic correspondence of credible organisations. While each mail service used by an organisation may be uniquely identifiable, large organisations employ multiple (potentially hundreds) of real or virtualised mail servers - including dynamically provisioned mail servers - leading to significant difficulties tracing a particular mail server to a particular organisation.

Techniques for detecting malicious communications are described in each of US2019/319905, XUN YUE ET AL: "Artificial immune system inspired behavior-based anti-spam filter" (XP055754929) and VERMA RAKESH ET AL: "Phish-IDetector: Message-ID based automatic phishing detection" (XP032927696).

According to a first aspect of the present invention, there is a provided a computer implemented method of detecting malicious electronic mail comprising: receiving an electronic mail message including an indication of a purported sender network domain and a Simple Mail Transfer Protocol identifier (SMTP ID); processing the SMTP ID with a classifier, wherein the classifier is implemented using a supervised machine learning method trained to classify the SMTP ID as originating from the purported sender domain based on a training data set including authentic electronic mail messages from the domain; and responsive to a classification, by the classifier, of the received message indicating that the received message originates from a sender other than the purported sender domain, identifying the received message as malicious.

Preferably the method further comprises, responsive to identifying the received message as malicious, performing a protection action including one or more of: deleting the received message; supplementing the received message with an indication that the received message is malicious; isolating the received message in a protected storage so as to prevent a content of the received message infecting a receiving computer system; and sending the received message to a security service. Preferably, the classifier is one of: an autencoder; a long-short-term memory; and a support vector machine.

Preferably, the received message has further associated a mail exchanger (MX) record for identifying an electronic mail server responsible for accepting the received message on behalf of a receiver network domain, the classifier is trained to classify a combination of the SMTP ID and the MX record, and the step of processing the SMTP ID with the classifier includes processing the SMTP ID and the MX record with the classifier.

According to a second aspect of the present invention, there is a provided a computer system including a processor and memory storing computer program code for performing the steps of the method set out above.

According to a third aspect of the present invention, there is a provided a computer system including a processor and memory storing computer program code for performing the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of an arrangement for detecting malicious electronic mail in accordance with an embodiment of the present invention; and
Figure 3 is a flowchart of a method for detecting malicious electronic mail in accordance with an embodiment of the present invention.

Embodiments of the present invention training a machine learning classifier based on features of mail servers used by an organisation (including dynamically provisioned servers) where the features are apparent in emails communicated by the mail servers. The trained classifier provides an indication of authenticity of an electronic mail (email) within a confidence interval. Emails indicating a particular mail server or mail origin can be processed by the classifier to determine such indication. There is a remaining challenge that mail server information is not consistent between messages arising from the same organisation. For example, different servers with different addresses can be involved in generating or forwarding email, especially in view of the increasing prospect of deploying short-lived virtual server instances on demand.

Accordingly, embodiments of the present invention employ the Simple Mail Transport Protocol identifier (SMTP ID) generated for email messages and classifying emails by the classifier based on the SMTP ID as a characteristic of an originating organisation. Notably, the originating organisation is reflected as an originating domain in the email message, such as "acme.com" for an "acme" organisation. The SMTP ID is generally a unique identifier generated by a mail server for each message. The manner of its generation is configurable and this leads to suitability for classifying based on the SMTP ID to model an originating server, so identifying an originating domain. Multiple originating servers instantiated on-demand for an organisation domain will use identical or very similar SMTP ID generation algorithms and parameters and so will be equally discernible using the trained classifier.

The trained classifier can then be used to identify messages claiming to originate from an organisation domain that fail to classify in association with the organisation domain. Such messages can then identified as malicious and handled appropriately.

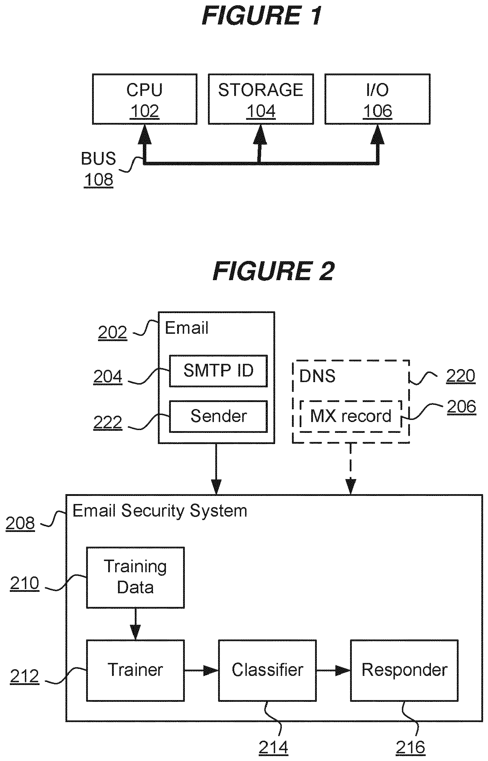

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for detecting malicious electronic mail in accordance with an embodiment of the present invention. An email security system 208 is provided as a hardware, software, firmware or combination component operable to provide for the identification of malicious email in accordance with embodiments of the present invention. The email security system 208 can be, for example, a software component installed on a network connected computer system associated with an email server or the like. The security system 208 is operable to receive emails such as email 202. Preferably, emails are received by the security system 208 prior to their delivery to an intended recipient's mailbox such that the benefits of malicious email identification by the security system 208 can be enjoyed before delivery of the email.

A received email 202 includes a message content (such as text or other media) and additional fields commonly associated with electronic mails such as an email header or the like. Such fields include at least an SMTP ID 204. The SMTP ID 204 is an identifier for the email 202 generated by or for a mail server of an originator of the email 202 as is well known to those skilled in the art. The email 202 further includes an indication of a network domain of a purported sender 222 of the email which also serves as an indication of the sender 222.

The email security system 208 includes a classifier 214 including a machine learning method such as a supervised machine learning algorithm trained to classify an SMTP ID and purported sender for an email into two or more classes such that the classes serve to indicate a degree of confidence that the email originates from the purported sender domain.

For example, the classifier 214 can be implemented as, inter alia: an autencoder; a long-short-term memory; or a support vector machine, each of which is known to those skilled in the art. Thus, the classifier 214 is trained by a trainer 212, such as a hardware, software, firmware or combination component arranged to train the classifier 214 based on training data 210. The training data 210 includes authentic email messages each having authentic SMTP IDs and indication of sender domains such that the classifier 214, when trained, is operable to distinguish authentic and malicious emails within a degree of tolerance. Notably, in some embodiments, the trainer 212 can be operable at a runtime of the security system 208 on the basis of user feedback to further train the classifier 214 based on confirmed authentic or malicious emails received subsequent to an initial training of the classifier 214 so as to maintain a currency and applicability of the classifier 214.

Thus, in use, the classifier 214 processes the SMTP ID 204 and sender domain of the email 202 to determine if the email is authentic or malicious. Where a malicious email is detected, a responder component 216 is operable to provide responsive actions. The responder component 216 is a hardware, software, firmware or combination component arranged to react to an identification of a malicious email. Responsive measures taken by the responder component can include performing a protection action including one or more of: deleting the received message 202; supplementing the received message 202 with an indication that the received message 202 is malicious; isolating the received message 202 in a protected storage so as to prevent a content of the received message 202 infecting a receiving computer system; and/or sending the received message 202 to a security service for further analysis and/or processing.

In one embodiment, the security system 208 is further adapted to access a domain name service 220 and, specifically, mail exchanger (MX) records 206 for the received email 202. An MX record 206 identifies a particular mail server for receiving email for a mail recipient at a receiver network domain. In this embodiment, the MX record 206 applicable to a received email 202 is used in addition to the SMTP ID 204 as input to the classifier 214 for classifying the email 202. Notably, in such an embodiment, the classifier 214 is trained based on training data 210 including both SMTP ID information and MX record information for each training data item. Thus, the inclusion of MX record information in the classifier for classifying the email 202 can improve the accuracy of the classification of emails as authentic or malicious.

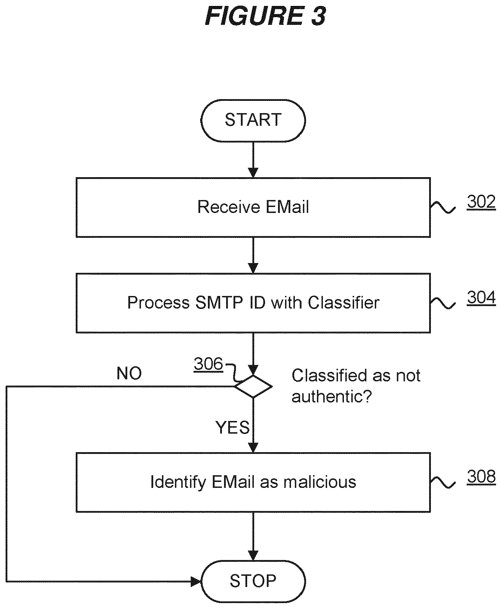

Figure 3 is a flowchart of a method for detecting malicious electronic mail in accordance with an embodiment of the present invention. Initially, at step 302, the method receives an email 202 including an SMTP ID 204 and an indication of a sender 222 network domain. At step 304 the SMTP ID 204 and sender domain are processed by the classifier 214. Where the classifier 214 determines that the email is not authentic at step 306, the method identifies the email as not authentic at step 308. Responsive measures may also be taken as described above.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

## Claims

1. A computer implemented method of detecting malicious electronic mail comprising:
receiving (302) an electronic mail message (202) including an indication of a purported sender network domain and a Simple Mail Transfer Protocol identifier, SMTP ID;
processing (304) the SMTP ID with a classifier (214), wherein the classifier is implemented using a supervised machine learning method trained to classify the SMTP ID as originating from the purported sender domain based on a training data set including authentic electronic mail messages from the domain; and
responsive to a classification (306), by the classifier, of the received message indicating that the received message originates from a sender other than the purported sender domain, identifying (308) the received message as malicious.

2. The method of claim 1 further comprising, responsive to identifying the received message as malicious, performing a protection action including one or more of: deleting the received message; supplementing the received message with an indication that the received message is malicious; isolating the received message in a protected storage so as to prevent a content of the received message infecting a receiving computer system; and sending the received message to a security service.

3. The method of any preceding claim wherein the classifier is one of: an autencoder; a long-short-term memory; and a support vector machine.

4. The method of any preceding claim,
wherein the received message has further associated a mail exchanger, MX, record for identifying an electronic mail server responsible for accepting the received message on behalf of a receiver network domain,
wherein the classifier is trained to classify a combination of the SMTP ID and the MX record, and
wherein the step of processing the SMTP ID with the classifier includes processing the SMTP ID and the MX record with the classifier.

5. The method of any preceding claim, wherein the electronic mail message is received at a security system implementing the method before delivery of the message to an intended recipient mailbox.

6. A computer system including a processor and memory storing computer program code for performing the steps of the method of any preceding claim.

7. A computer program element comprising computer program code to, when loaded into a computer system and executed thereon, cause the computer to perform the steps of a method as claimed in any of claims 1 to 5.

## Patentansprüche

1. Computerimplementiertes Verfahren zum Detektieren von schädlicher E-Mail, umfassend:
Empfangen (302) einer E-Mail-Nachricht (202), die eine Anzeige einer angeblichen Sender-Netzwerkdomäne und eine Kennung des Simple Mail Transfer Protocols, SMTP ID, beinhaltet;
Verarbeiten (304) der SMTP ID mit einem Klassifizierer (214), wobei der Klassifizierer unter Verwendung eines supervised Maschinenlernverfahrens implementiert wird, das zum Klassifizieren der SMTP ID, wie sie von der angeblichen Senderdomäne stammt, trainiert ist, basierend auf einem Trainingsdatensatz, der authentische E-Mail-Nachrichten von der Domäne enthält; und
als Reaktion auf eine Klassifikation (306), durch den Klassifizierer, der empfangenen Nachricht, die anzeigt, dass die empfangene Nachricht von einem anderen Sender als der angeblichen Senderdomäne stammt, Identifizieren (308) der empfangenen Nachricht als schädlich.

2. Verfahren nach Anspruch 1, ferner umfassend, als Reaktion auf Identifizieren der empfangenen Nachricht als schädlich, Durchführen einer Schutzaktion, die ein oder mehrere der Folgenden beinhaltet:
Löschen der empfangenen Nachricht;
Ergänzen der empfangenen Nachricht mit einer Anzeige, dass die empfangene Nachricht schädlich ist;
Isolieren der empfangenen Nachricht in einer geschützten Ablage, um somit zu verhindern, dass ein Inhalt der empfangenen Nachricht ein empfangendes Computersystem infiziert; und
Senden der empfangenen Nachricht an einen Sicherheitsdienst.

3. Verfahren nach einem vorhergehenden Anspruch, wobei der Klassifizierer einer der folgenden ist: ein Autoencoder; ein langes Kurzzeitgedächtnis; und eine Support-Vektor-Maschine.

4. Verfahren nach einem vorhergehenden Anspruch,
wobei die empfangene Nachricht ferner einen assoziierten Mail-Exchanger-Eintrag bzw. MX-Eintrag zum Identifizieren eines E-Mail-Servers, der für Akzeptieren der empfangenen Nachricht im Auftrag einer Empfänger-Netzwerkdomäne verantwortlich ist, aufweist,
wobei der Klassifizierer trainiert ist zum Klassifizieren einer Kombination der SMTP ID und des MX-Eintrags, und wobei der Schritt von Verarbeiten der SMTP ID mit dem Klassifizierer Verarbeiten der SMTP ID und des MX-Eintrags mit dem Klassifizierer beinhaltet.

5. Verfahren nach einem vorhergehenden Anspruch, wobei die E-Mail-Nachricht an einem Sicherheitssystem, das das Verfahren implementiert, vor Ablieferung der Nachricht an ein beabsichtigtes Empfängerpostfach empfangen wird.

6. Computersystem, das einen Prozessor und einen Arbeitsspeicher, der Computerprogrammcode zum Durchführen der Schritte des Verfahrens nach einem vorhergehenden Anspruch speichert, beinhaltet.

7. Computerprogrammelement, umfassend Computerprogrammcode, wenn in ein Computersystem geladen und darauf ausgeführt, um den Computer zum Durchführen eines Verfahrens nach einem der Ansprüche 1 bis 5 zu veranlassen.

## Revendications

1. Procédé mis en œuvre par ordinateur pour détecter un courrier électronique malveillant, le procédé comprenant les étapes suivantes :
recevoir (302) un message de courrier électronique (202) comprenant une indication du domaine du réseau de l'expéditeur présumé et un identifiant SMTP, Simple Mail Transfer Protocol ;
traiter (304) l'identifiant SMTP avec un classificateur (214), où le classificateur est mis en œuvre à l'aide d'un procédé d'apprentissage automatique supervisé formé pour classer l'identifiant SMTP comme provenant du domaine de l'expéditeur présumé sur la base d'un ensemble de données de formation comprenant des messages de courrier électronique authentiques provenant du domaine ; et
en réponse à une classification (306), par le classificateur, du message reçu indiquant que le message reçu provient d'un expéditeur autre que le domaine de l'expéditeur présumé, identifier (308) le message reçu comme étant malveillant.

2. Procédé selon la revendication 1 comprenant en outre, en réponse à l'identification du message reçu comme étant malveillant, d'exécuter une action de protection comprenant une ou plusieurs des actions suivantes : supprimer le message reçu ; compléter le message reçu avec une indication que le message reçu est malveillant ; isoler le message reçu dans une mémoire de stockage protégée de manière à empêcher un contenu du message reçu d'infecter un système informatique récepteur ; et envoyer le message reçu à un service de sécurité.

3. Procédé selon une quelconque revendications précédentes, dans lequel le classificateur est l'un des éléments suivants : un auto-codeur ; une mémoire à long et court terme ; et une machine à vecteurs de support.

4. Procédé selon l'une quelconque des revendications précédentes, dans lequel le message reçu est en outre associé à un enregistrement d'échangeur de courrier, MX, pour identifier un serveur de courrier électronique responsable de l'acceptation du message reçu au nom d'un domaine de réseau récepteur,
où le classificateur est formé pour classer une combinaison de l'identifiant SMTP et de l'enregistrement MX, et
où l'étape de traitement de l'identifiant SMTP avec le classificateur comprend de traiter l'identifiant SMTP et l'enregistrement MX avec le classificateur.

5. Procédé selon l'une quelconque des revendications précédentes, dans lequel le message de courrier électronique est reçu par un système de sécurité mettant en œuvre le procédé avant la livraison du message à une boîte aux lettres de destinataire prévu.

6. Système informatique comprenant un processeur et une mémoire stockant un code de programme informatique pour exécuter les étapes du procédé selon l'une quelconque des revendications précédentes.

7. Élément de programme informatique comprenant un code de programme informatique pour, lorsqu'il est chargé dans un système informatique et exécuté sur celui-ci, amener l'ordinateur à exécuter les étapes d'un procédé tel que revendiqué dans l'une quelconque des revendications 1 à 5.
